# EUROPEAN PATENT APPLICATION

(11) **EP 4 715 505 A1**
(43) Date of publication of application: **25.03.2026**
(21) Application number: 25170496.1
(22) Date of filing: 14.04.2025
(51) Int. Cl.: G05B 19/418, G06Q 10/06

(54) **APPARATUS AND METHOD FOR PREDICTING QUALITY OF PRODUCT, AND COMPUTER PROGRAM**

(30) Priority: 24.09.2024 KR 20240129317
(71) Applicant: SAMSUNG SDI CO., LTD., Yongin-si, Gyeonggi-do 17084 (KR)
(72) Inventor: LEE, Hae Won, 16678 Suwon-si (KR); LEE, Hyeong Min, 16678 Suwon-si (KR); KIM, Jae Hyeon, 16678 Suwon-si (KR); LEE, Dong Ah, 16678 Suwon-si (KR)
(74) Representative: Marks & Clerk LLP

(57) **Abstract**

The present technology relates to an apparatus and method for predicting quality of a product and a computer program and is directed to providing a solution capable of increasing a manufacturing yield of finished products and reducing a discard rate by verifying a tolerance range of a process factor applied to a product manufacturing process and optimizing a tolerance range of an unverified process factor. The present technology may provide a configuration in which a second target value of a performance factor of the finished product and an uncertainty range of the second target value are predicted from a first target value of a target process factor applied to a target manufacturing process and a tolerance range of the first target value using the performance prediction model, and the predicted uncertainty range is compared with a predefined reference range to verify the tolerance range of the first target value.

## Description

### FIELD

The present technology relates to an apparatus and method for predicting quality of a product and relates to a computer program.

### BACKGROUND

Unlike primary batteries that cannot be recharged, secondary batteries are batteries that can be charged or discharged. Low-capacity secondary batteries are used in small portable electronic devices, such as smartphones, feature phones, laptop computers, digital cameras, and camcorders, and high-capacity secondary batteries are widely used as power sources for driving motors in hybrid vehicles, electric vehicles, etc. and as batteries for power storage. Such a secondary battery may include an electrode assembly consisting of a positive electrode and a negative electrode, a case accommodating the electrode assembly, an electrode terminal connected to the electrode assembly, etc.

A manufacturing process of a secondary battery cell may be largely divided into an electrode process, an assembly process, and a formation process. A semi-finished product of a secondary battery cell is manufactured through each process, and in the manufacturing process, each respective process is performed according to a predefined tolerance range to compensate for mechanical limitations of process equipment.

The above information disclosed in this Background section is for enhancement of understanding of the background of the present disclosure, and therefore, it may contain information that does not constitute related (or prior) art.

### SUMMARY

The present technology is directed to providing an apparatus and method for predicting the quality of a product (e.g. secondary battery cells), which are each capable of increasing a manufacturing yield of the product (e.g. secondary battery cells) and reducing a discard rate by verifying a tolerance range of a process factor applied to a manufacturing process of the product (e.g. secondary battery cells) and optimizing a tolerance range of an unverified process factor, and is directed to a computer program.

However, objects that the technology described herein intends to achieve are not limited to the above-described objects and other objects that are not described may be clearly understood by those skilled in the art from the following description.

According to some aspects of the technology described herein, there is provided an apparatus for predicting quality of a product, which includes a memory configured to store a performance prediction model configured to predict performance of a finished product manufactured through a plurality of manufacturing processes; and a processor configured to predict a second target value of a performance factor of the finished product and an uncertainty range of the second target value from a first target value of a target process factor to be applied to a target manufacturing process and from a tolerance range of the first target value by using and/or executing the performance prediction model and configured to compare the predicted uncertainty range with a predefined reference range to verify the tolerance range of the first target value.

The uncertainty range may represent a confidence interval of the second target value of the performance factor of the finished product.

The performance prediction model may be configured to be pre-trained based on historical data on a first target value of a target process factor actually applied to the target manufacturing process and a tolerance range of the first target value of the target process factor actually applied and (actual) measurement data on a performance factor of the finished product actually manufactured according to the target manufacturing process, and wherein the performance prediction model is stored in the memory.

The processor may be configured to determine that the tolerance range of the first target value is verified when the predicted uncertainty range is included in the reference range.

After verification of a respective tolerance range of each process factor to be applied to the target manufacturing process is completed, the processor may be configured to verify a tolerance range of each process factor to be applied to a subsequent manufacturing process of the target manufacturing process.

The processor may be configured to determine that the tolerance range of the first target value is not verified when the predicted uncertainty range is not included in the reference range and optimize the tolerance range of the first target value.

The processor may be configured to input a plurality of first to N^{th} candidate tolerance ranges having a different size for the first target value into the performance prediction model to obtain first to N^{th} uncertainty ranges, respectively, and compare each of the obtained first to N^{th} uncertainty ranges with the reference range to optimize the tolerance range of the first target value. N may be a natural number greater than or equal to 2.

The processor may be configured to determine first to K^{th} uncertainty ranges included in the reference range from among the first to N^{th} uncertainty ranges and determine a candidate tolerance range having a minimum size from among first to K^{th} candidate tolerance ranges respectively corresponding to the first to K^{th} uncertainty ranges as an optimized tolerance range of the first target value. K may be a natural number less than or equal to N.

After the optimization of the tolerance range of the first target value of the target process factor is completed, the processor may be configured to optimize a tolerance range of a preceding process factor to be applied to product manufacturing prior to the target process factor using the same optimization method as the tolerance range of the target process factor.

After the optimization of the tolerance range of each process factor applied to the target manufacturing process is completed, the processor may be configured to optimize a tolerance range of each process factor to be applied to a preceding manufacturing process of the target manufacturing process using the same optimization method as the tolerance range of each process factor applied to the target manufacturing process.

According to other aspects of the technology described herein, there is provided a method of predicting quality of a product, which includes predicting, by a processor, a second target value of a performance factor of a finished product and an uncertainty range of the second target value from a first target value of a target process factor applied to a target manufacturing process and a tolerance range of the first target value using a performance prediction model, and verifying, by the processor, the tolerance range of the first target value by comparing the predicted uncertainty range with a predefined reference range.

The uncertainty range may represent a confidence interval of the second target value of the performance factor of the finished product.

The performance prediction model may be configured to be pre-trained based on historical data on a first target value of a target process factor actually applied to the target manufacturing process and a tolerance range of the first target value of the target process factor actually applied and measurement data on a performance factor of the finished product actually manufactured according to the target manufacturing process, wherein the performance prediction model is stored in a memory.

In the verifying of the tolerance range of the first target value, the processor may determine that the tolerance range of the first target value is verified when the predicted uncertainty range is included in the reference range, and the method may further include after the verifying of the tolerance range of the first target value, verifying, by the processor, a tolerance range of each process factor to be applied to a subsequent manufacturing process of the target manufacturing process.

In the verifying of the tolerance range of the first target value, the processor may determine that the tolerance range of the first target value is not verified when the predicted uncertainty range is not included in the reference range, and the method may further include after the verifying of the tolerance range of the first target value, optimizing, by the processor, the tolerance range of the first target value.

In the optimizing of the tolerance range of the first target value, the processor may input a plurality of first to N^{th} candidate tolerance ranges having a different size for the first target value into the performance prediction model to obtain first to N^{th} uncertainty ranges, respectively, and compare each of the obtained first to N^{th} uncertainty ranges with the reference range to optimize the tolerance range of the first target value, wherein N is a natural number greater than or equal to 2.

In the optimizing of the tolerance range of the first target value, the processor may determine first to K^{th} uncertainty ranges included in the reference range from among the first to N^{th} uncertainty ranges and determine a candidate tolerance range having a minimum size from among first to K^{th} candidate tolerance ranges respectively corresponding to the first to K^{th} uncertainty ranges as an optimized tolerance range of the first target value, wherein K is a natural number less than or equal to N.

The method may further include, after the optimizing of the tolerance range of the first target value, optimizing, by the processor, a tolerance range of a preceding process factor to be applied to product manufacturing prior to the target process factor using the same optimization method as the tolerance range of the target process factor.

The method may further include, after the optimizing of the tolerance range of the preceding process factor, optimizing, by the processor, the tolerance range of each process factor to be applied to a preceding manufacturing process of the target manufacturing process using the same optimization method as the tolerance range of each process factor applied to the target manufacturing process.

According to other aspects of the technology described herein, there is provided a non-transitory computer-readable medium having instructions stored thereon that, when executed by a processor, cause the processor to execute operations by performing a method including: predicting a second target value of a performance factor of a finished product and an uncertainty range of the second target value from a first target value of a target process factor applied to a target manufacturing process and a tolerance range of the first target value using a performance prediction model, and verifying the tolerance range of the first target value by comparing the predicted uncertainty range with a predefined reference range.

At least some of the above and other features of the invention are set out in the claims.

### BRIEF DESCRIPTION OF THE DRAWINGS

The following drawings accompanying this specification illustrate embodiments of the present disclosure, and further describe aspects and features of the present disclosure together with the detailed description of the present disclosure. Thus, the present disclosure should not be construed as being limited to the drawings, in which:
FIG. 1 is a block diagram illustrating an apparatus for predicting quality of a product according to some embodiments;
FIG. 2 is an example diagram illustrating an operation of a performance prediction model of the apparatus for predicting the quality of the product according to some embodiments;
FIGS. 3 and 4 are example diagrams illustrating a process of verifying a tolerance range of a process factor of the apparatus for predicting the quality of the product according to some embodiments; and
FIG. 5 is a flowchart illustrating a method of predicting quality of a product according to some embodiments.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meanings and concepts consistent with the technical idea of the present disclosure based on the principle that the inventor can be his/her own lexicographer to appropriately define the concept of the term to explain his/her technology in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

Hereinafter, in order to aid understanding of embodiments, the embodiments will be described with reference to an example of a process for manufacturing a secondary battery cell, and accordingly, the following terms are firstly defined.

Semi-finished products indicated herein may correspond to semi-finished products of secondary battery cells manufactured in each manufacturing process of secondary battery cells, and finished products may correspond to finished products of secondary battery cells manufactured through all of the manufacturing processes. A manufacturing process of a product may be defined as including an electrode process, an assembly process, and a formation process. Process factors applied to the manufacturing process may correspond to process control variables applied to the corresponding manufacturing process or process control variables that will be applied to the corresponding manufacturing process. For example, in the case of an electrode process, a positive electrode coating width on a first surface (e.g., an upper surface) of an electrode plate or a positive electrode coating width on a second surface (e.g., a lower surface) of the electrode plate may correspond to the process factor; in the case of an assembly process, a positive electrode slitter plate width or a negative electrode slitter plate width may correspond to the process factor; and in the case of a formation process, a formation charge capacity or a formation discharge capacity may correspond to the process factor.

A "tolerance range verification operation" and "tolerance range optimization operation" of the present embodiments are applied in the same manner to each manufacturing process and each process factor applied to the manufacturing process. In order to describe the above "tolerance range verification operation" and "tolerance range optimization operation," the manufacturing process and process factor, which become targets, are respectively denoted as a target manufacturing process and a target process factor. For example, the target manufacturing process and the target process factor may respectively correspond to the electrode process and the positive electrode coating width of the first surface of the electrode plate, the target manufacturing process and the target process factor may respectively correspond to the assembly process and the positive electrode slitter plate width, or the target manufacturing process and the target process factor may respectively correspond to the formation process and the formation charge capacity.

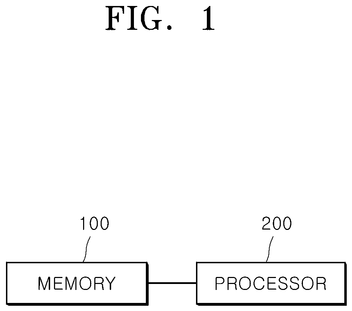

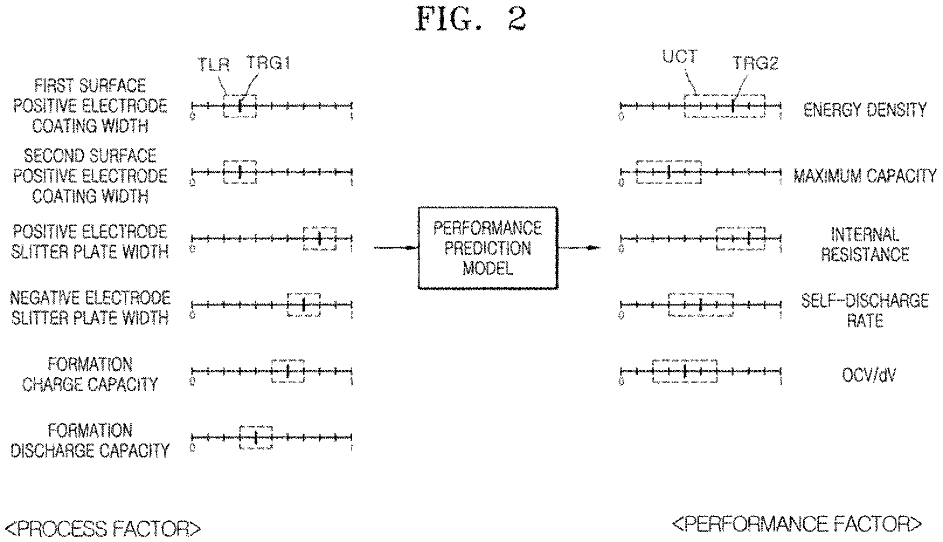

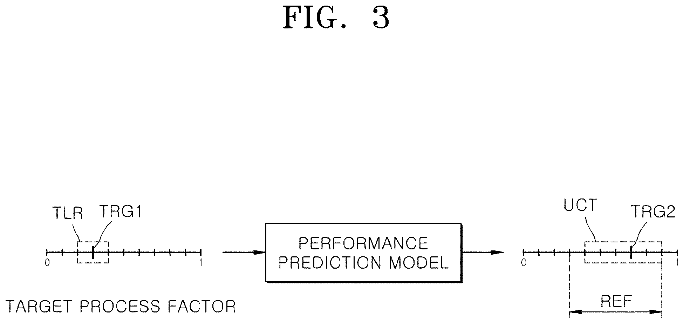

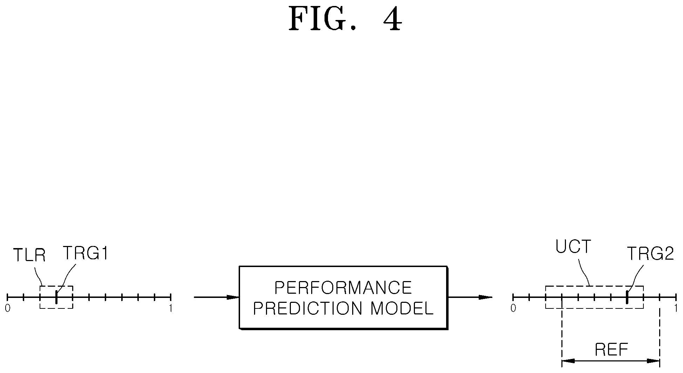

FIG. 1 is a block diagram illustrating an apparatus for predicting quality of a product according to some embodiments. FIG. 2 is an example diagram illustrating an operation of a performance prediction model of the apparatus for predicting the quality of the product according to some embodiments. FIGS. 3 and 4 are example diagrams illustrating a process of verifying a tolerance range of a process factor of the apparatus for predicting the quality of the product according to some embodiments.

Referring to FIG. 1, the apparatus for predicting the quality of the product of the present embodiments may include a memory 100 and a processor 200.

At least one instruction to be executed by the processor 200 may be stored in the memory 100. Further, in the present embodiments, a performance prediction model configured to predict the performance of a finished product manufactured through a plurality of manufacturing processes and a tolerance range selection model configured to set a plurality of tolerance ranges having a different range for a target value of the process factor may be stored in the memory 100 (a detailed description of each model will be described further below). The memory 100 may be implemented as a volatile storage medium and/or a non-volatile storage medium and may be implemented as, for example, a read-only memory (ROM) and/or a random-access memory (RAM). The memory may include a non-transitory computer-readable medium. The memory 100 may be implemented by being integrated into the processor 200 which will be described further below.

The processor 200 is a subject that may perform the "tolerance range verification operation" and "tolerance range optimization operation" described herein, may be implemented as a central processing unit (CPU) or a system on chip (SoC), may control a plurality of hardware or software components by driving an operating system or application, and may perform various data processing and operations. The processor 200 may be configured to execute at least one instruction stored in the memory 100 and store result data of the execution in the memory 100. The processor may be configured to execute the performance prediction model described herein. The processor 200 may be implemented as a programmable logic controller (PLC) for controlling manufacturing equipment provided for manufacturing processes of a secondary battery cell.

In the present embodiments, the processor 200 may predict a second target value of a performance factor of a finished product and an uncertainty range of the second target value from a first target value of a target process factor applied to a target manufacturing process and (from) a tolerance range of the first target value using the performance prediction model stored in the memory 100, and the processor may compare the predicted uncertainty range with a predefined reference range to verify the tolerance range of the first target value. Such an operation of the processor 200 corresponds to the "tolerance range verification operation."

When it is determined that the tolerance range of the first target value is verified by the tolerance range verification operation, the processor 200 may output the first target value to a manufacturing process system or apparatus configured to perform a manufacturing process including the target process factor. For example, the system or apparatus may comprise one or more target process facilities, each facility configured to carry out/apply a respective target process factor. In some embodiments, the manufacturing process system or apparatus is then configured to carry out the target manufacturing process by performing the target process factor according to the first target value and verified tolerance range for the first target value. In some embodiments, a plurality of tolerance ranges for a respective plurality of target process factors may be verified. In these embodiments, the plurality of tolerance ranges and respective target process values are output to the manufacturing system or apparatus for performance of the respective plurality of target process factors. In some embodiments, the manufacturing process apparatus comprises the apparatus for predicting quality of a product of Figure 1 .

When it is determined that the tolerance range of the first target value is not verified by the tolerance range verification operation, the processor 200 may input a plurality of first to N^{th} candidate tolerance ranges having a different size for the first target value into the performance prediction model to obtain first to N^{th} uncertainty ranges and compare the obtained first to N^{th} uncertainty ranges with a reference range to optimize the tolerance range of the first target value. Such an operation of the processor 200 corresponds to the "tolerance range optimization operation." After performance of each tolerance range optimization process, the respective optimized tolerance range and associated first target value may be output to the manufacturing process system or apparatus in the same manner as described above for verified tolerance ranges.

By performing tolerance range verification prior to manufacturing a product, it is possible to avoid using tolerance ranges that would otherwise produce a faulty product or a product of unacceptable quality. As a result, the discard rate of manufactured products can be reduced, and a manufacturing yield of a product can be increased. The discard rate can be further reduced and the manufacturing yield further increased by optimizing unverified tolerance ranges, as described herein.

The operation of the processor 200 will be described in further detail below.

### 1. Tolerance range verification operation

When a tolerance range verification operation is performed, a performance prediction model that is pre-trained to predict the performance of a finished product may be used. The performance prediction model may be configured to be pre-trained based on history (historical) data on a target value and a tolerance range of a target process factor actually applied to (e.g., physically implemented during) a target manufacturing process and actual measurement data on a performance factor of a finished product actually manufactured according to the target manufacturing process, and the performance prediction model may be stored in the memory 100. That is, the performance prediction model may be pre-trained based on past history data on a target value and a tolerance range of a process factor applied to each process facility during an actual manufacturing process of the secondary battery cell, and actual measurement data on the performance factor of the finished product actually manufactured according to the manufacturing process on the basis of the target value and tolerance range of the above-described history data.

Accordingly, the performance prediction model may perform a function of predicting a performance factor of a finished product when a corresponding semi-finished product is manufactured into the finished product through a subsequent manufacturing process when the semi-finished product is manufactured through a corresponding manufacturing process according to a target value of a corresponding process factor and a tolerance range of the target value. As the performance prediction model is trained based on the history data on the target value and the tolerance range of the target process factor and the actual measurement data on the performance factor of the actually manufactured finished product, the influence of various process variables on the performance factor of the finished product that is caused in the actual manufacturing process may be taken into consideration.

In some examples, performance factors of a finished product corresponding to a secondary battery cell may be an energy density, a maximum capacity, an internal resistance, a self-discharge rate, and an open circuit voltage (OCV)/dV, in which:
i) when training of a performance prediction model is performed to predict performance factors of a finished product in an electrode process, input data for training may include a positive electrode coating width of a first surface of an electrode plate applied to the electrode process and a positive electrode coating width of a second surface of the electrode plate as well as actual measurement data of the above performance factors (other process factors applied to the electrode process, such as a negative electrode coating width of the first surface of the electrode plate, a negative electrode coating width of the second surface of the electrode plate, etc. may be further included),
ii) when training of the performance prediction model is performed to predict the performance factors of the finished product in an assembly process, the input data for training may include a positive electrode slitter plate width and negative electrode slitter plate width applied to the assembly process as well as the actual measurement data of the above performance factors (other process factors applied to the assembly process, such as a positive electrode slitter blank width, a negative electrode slitter blank width, etc. may be further included), and
iii) when training of the performance prediction model is performed to predict the performance factors of the finished product in a formation process, the input data for training may include a formation charging capacity and a formation discharging capacity as well as the actual measurement data of the above performance factors (other process factors applied to the formation process, such as a charging temperature, a charging time, etc. may be further included).

A training method such as linear regression or supervised learning-based machine learning may be applied to the training of the performance prediction model described above.

When the training of the performance prediction model is completed and the trained performance prediction model is stored in the memory 100, the processor 200 may predict a second target value of the performance factor of the finished product and an uncertainty range of the second target value from a first target value of a target process factor (to be) applied to a target manufacturing process and a tolerance range of the first target value using the performance prediction model (for the purpose of distinguishing the target value terms, the target value of the target process factor is expressed as the first target value, and the target value of the performance factor of the finished product is expressed as the second target value).

Examples will be described with reference to FIGS. 2 to 4, which illustrate cases in which ranges of process factors and performance factors are scaled to values of 0 to 1. For reference, in FIGS. 2 to 4, TRG1 denotes a first target value, TLR denotes a tolerance range of the first target value, TRG2 denotes a second target value, UCT denotes an uncertainty range of the second target value, and REF denotes a reference range.

In FIG. 2, inputs (e.g., process factors) of the performance prediction model include a positive electrode coating width on a first surface of an electrode plate (hereinafter, referred to as a "first surface positive electrode coating width") and a positive electrode coating width on a second surface of the electrode plate (hereinafter, referred to as a "second surface positive electrode coating width") in an electrode process, a positive electrode slitter plate width and a negative electrode slitter plate width in the assembly process, and a formation charge capacity and formation discharge capacity in a formation process. Further, in FIG. 2, outputs (i.e., performance factors) of the performance prediction model are an energy density, a maximum capacity, an internal resistance, a self-discharge rate, and an OCV/dV. A target process factor may be any one of the inputs of the performance prediction model in FIG. 2, and a performance factor may be any one of the outputs of the performance prediction model.

Referring to FIG. 3, which illustrates a case in which a target process factor is a first surface positive electrode coating width and a performance factor is an energy density, the processor 200 may input a first target value (e.g., 0.3) of the first surface positive electrode coating width and a tolerance range (e.g., 0.2 to 0.4) of the first target value into the performance prediction model and predict a second target value (e.g., 0.7) of the energy density and an uncertainty range (e.g., 0.4 to 0.9) of the second target value as the outputs of the performance prediction model.

In some embodiments, the above-described uncertainty range represents a confidence interval of a second target value of a performance factor of a finished product. In the example of FIG. 3, the fact that the second target value is 0.7 and the uncertainty range of the second target value is a range of 0.4 to 0.9 means that when the first target value of the first surface positive electrode coating width is 0.3 and the tolerance range of the first target value is a range of 0.2 to 0.4, the second target value of the energy density of the finished product of the secondary battery cell has a value of 0.7 and that the second target value may be variably formed in the range of 0.4 to 0.9 depending on the tolerance range of the first target value and other process variables. That is, the example of FIG. 3 illustrates that when the first surface positive electrode coating width is 0.3 (the first target value), the energy density of the finished product is formed to be 0.7 (the second target value), but the energy density of the finished product may be variably formed to be in a range of 0.4 to 0.9 depending on the tolerance range (e.g., 0.2 to 0.4) of the first surface positive electrode coating width and other process variables. Accordingly, the uncertainty range may be a range of values that the performance factor of the finished product can have depending on the tolerance range of the target process factor and other process variables.

When the second target value of the performance factor of the finished product and the uncertainty range of the second target value are predicted, the processor 200 may compare the predicted uncertainty range with a predefined reference range to verify the tolerance range of the first target value of the target process factor.

When the predicted uncertainty range is included in the reference range, the processor 200 may determine that the tolerance range of the first target value is verified. The fact that the uncertainty range is included in the reference range means that a lower limit of the uncertainty range is greater than or equal to a lower limit of the reference range and an upper limit of the uncertainty range is less than or equal to an upper limit of the reference range and thus may include a case in which the uncertainty range and the reference range have the same range.

The reference range may be an allowable range of performance factors predefined according to the design specifications of the finished product (e.g., the design specifications of the secondary battery cell). Accordingly, the uncertainty range of the second target value being included in the reference range means that, depending on the tolerance range of the target process factor, the finished product may be manufactured so that the performance factor of the finished product has a value within a range of the design specifications when the product is manufactured (e.g., it can mean that the finished product may be manufactured according to the design specifications), and thus the processor 200 may determine that the tolerance range of the first target value of the target process factor is verified. In the example of FIG. 3, the uncertainty range (e.g., 0.4 to 0.9) of the second target value (e.g., 0.7) is included in the reference range (e.g., 0.3 to 0.9), and thus it is determined that the tolerance range (e.g., 0.2 to 0.4) of the first target value (e.g., 0.3) is verified.

When verification of the tolerance range of each process factor (including the target process factor) that constitutes the target manufacturing process is completed, the processor 200 may verify the tolerance range of each process factor applied to a subsequent manufacturing process of the target manufacturing process (e.g., the manufacturing process performed subsequent to the target manufacturing process). For example, when both of the verification of the tolerance range of the first surface positive electrode coating width and the tolerance range of the second surface positive electrode coating width in the electrode process are completed, the processor 200 may verify a tolerance range of a positive electrode slitter plate width and a tolerance range of a negative electrode slitter plate width applied to an assembly process subsequent to the electrode process, and the verification method thereof can be equivalent to the tolerance range verification method of the process factor applied to the target manufacturing process. Accordingly, the processor 200 may perform a tolerance range verification operation on the basis of a forward approach according to the execution order of the manufacturing processes.

When the predicted uncertainty range is not included in the reference range, the processor 200 may determine that the tolerance range of the first target value of the target process factor is not verified. The uncertainty range not being included in the reference range follows a reverse logical interpretation of the case in which the above-described uncertainty range is included in the reference range.

In the example of FIG. 4, an uncertainty range (e.g., 0.2 to 0.8) of a second target value (e.g., 0.7) is not included in a reference range (e.g., 0.3 to 0.9), and thus it is determined that a tolerance range (e.g., 0.2 to 0.4) of a first target value (e.g., 0.3) is not verified.

When it is determined that the tolerance range of the first target value of the target process factor is not verified, a tolerance range optimization operation described further below is performed.

### 2. Tolerance range optimization operation

When it is determined that a tolerance range of a first target value of the target process factor is not verified, a processor 200 may optimize the tolerance range of the first target value.

Specifically, the processor 200 may input a plurality of first to N^{th} candidate tolerance ranges having a different size for the first target value into a performance prediction model to obtain first to N^{th} uncertainty ranges, respectively, and compare each of the obtained first to N^{th} uncertainty ranges with a reference range to optimize the tolerance range of the first target value (here, N is a natural number greater than or equal to 2).

The first to N^{th} candidate tolerance ranges refer to tolerance ranges that function as candidates for the optimized tolerance range and may have a different range from the above-described "unverified tolerance range." The processor 200 may determine the plurality of first to N^{th} candidate tolerance ranges having a different size for the first target value using the tolerance range selection model described above, and the tolerance range selection model may be pre-trained, for example, according to a patient rule induction method (PRIM) or classification and regression tree (CART), which is well-known as a scenario discovery (SD) algorithm.

The processor 200 may determine first to K^{th} uncertainty ranges included in the reference range among the first to N^{th} uncertainty ranges and determine a candidate tolerance range having a minimum size among the first to K^{th} candidate tolerance ranges respectively corresponding to the first to K^{th} uncertainty ranges as the optimized tolerance range of the first target value (here, K is a natural number less than or equal to N).

That is, as described above, the reference range corresponds to an allowable range of a performance factor predefined according to the design specifications of the finished product, and the processor 200 may firstly determine the first to K^{th} candidate tolerance ranges, which correspond to the first to K^{th} uncertainty ranges included in the reference range among the first to N^{th} uncertainty ranges, as the tolerance range that allows the performance factor of the finished product to satisfy the design specifications.

When the first to K^{th} candidate tolerance ranges are determined, the processor 200 may determine the candidate tolerance range with the smallest size among the first to K^{th} candidate tolerance ranges as the optimized tolerance range of the first target value. By determining the candidate tolerance range with the smallest size among the first to K^{th} candidate tolerance ranges as the optimized tolerance range of the first target value, quality improvement of the finished product having the performance factors satisfying the design specifications can be achieved.

As an example, in a case in which N is 5 and K is 2, the following case can be assumed: "0.22 to 0.4," "0.22 to 0.38," "0.24 to 0.4," "0.24 to 0.38," and "0.24 to 0.36" are determined as first to fifth candidate tolerance ranges from the tolerance range (e.g., 0.2 to 0.4) of the first target value (e.g., 0.3), and "0.22 to 0.8," "0.26 to 0.8," "0.3 to 0.92," "0.3 to 0.9," and "0.4 to 0.9" are determined to be first to fifth uncertainty ranges for each of the first to fifth candidate tolerance ranges. The uncertainty ranges included in the reference range (e.g., 0.3 to 0.9) among the first to fifth uncertainty ranges are the fourth and fifth uncertainty ranges, and the fifth candidate tolerance range with the smallest size among the fourth and fifth candidate tolerance ranges corresponding to the fourth and fifth uncertainty ranges, respectively, is determined as the optimized tolerance range of the first target value. A size of a range is understood to mean the absolute difference between a maximum value and minimum value for the range. (For example here, a size of the fourth candidate tolerance range is 0.14, and a size of the fifth candidate tolerance range is 0.12).

Meanwhile, when the tolerance range is smaller than a set level, a pass rate of the semi-finished product decreases, and thus it can become difficult to proceed with a subsequent process, which may decrease the manufacturing yield of the secondary battery cell. Therefore, the processor 200 may determine the candidate tolerance range with the smallest size among the first to K^{th} candidate tolerance ranges as the optimized tolerance range of the first target value, with a constraint that the tolerance range is greater than or equal to a reference size. That is, considering a decrease in manufacturing yield of finished products that may be caused by a tolerance range with a small size and an increase in defective rate of finished products that may be caused by a tolerance range with a large size, the processor 200 may determine a tolerance range that satisfies both of the first condition of having a tolerance range greater than or equal to a reference size and the second condition of having a tolerance range with a minimum size among the first to K^{th} candidate tolerance ranges as the optimized tolerance range of the first target value. The above-described reference size may be predefined in the processor 200 or memory 100 according to an intention of a designer in consideration of a target manufacturing yield for the finished products. In the above-described example, when the reference size is defined to be 0.13, the fourth candidate tolerance range is determined as the optimized tolerance range of the first target value.

After the optimization of the tolerance range of the first target value of the target process factor is completed, when there is a preceding process factor that is applied to product manufacturing prior to the target process factor, the processor 200 may optimize a tolerance range of the preceding process factor using the same optimization method as the above-described tolerance range of the target process factor.

In an example in which the target manufacturing process is an electrode process, since upper surface coating of an electrode plate is performed according to a first surface positive electrode coating width (e.g., an upper surface positive electrode coating width) and subsequently lower surface coating of the electrode plate is performed according to a second surface positive electrode coating width (e.g., a lower surface positive electrode coating width), the above-described preceding process factor may correspond to the first surface positive electrode coating width when the target process factor is the second surface positive electrode coating width.

Since a tolerance range of the first surface positive electrode coating width and a tolerance range of the second surface positive electrode coating width have an interdependent relationship (e.g., the tolerance range of the second surface positive electrode coating width may vary depending on the tolerance range of the first surface positive electrode coating width), when a tolerance range of a first target value of the second surface positive electrode coating width is optimized, a tolerance range of a first target value of the first surface positive electrode coating width, which is applied to the electrode process prior to the second surface positive electrode coating width, also needs to be optimized.

In the above example, when the optimization of the tolerance range of the first target value of the second surface positive electrode coating width is completed, the processor 200 may optimize the tolerance range of the first target value of the first surface positive electrode coating width applied to the electrode process prior to the above optimization, and the optimization method thereof may be identical to the optimization method of the tolerance range of the first target value of the second surface positive electrode coating width. Accordingly, the tolerance range optimization operation may be performed based on a backward approach in which a tolerance range of a target process factor (e.g., a subsequent process factor) is optimized, and correspondingly, a tolerance range of a preceding process factor is optimized. Through the tolerance range optimization operation based on the backward approach, the tolerance range of the preceding process factor may be optimized to a range that ensures that the tolerance range of the previously optimized target process factor (e.g., the subsequent process factor) is secured while ensuring that the uncertainty range of the target value of the performance factor of the finished product is included in the reference range.

Additionally, after the optimization of the tolerance range of each process factor applied to the target manufacturing process is completed, the processor 200 may optimize the tolerance range of each process factor applied to the preceding manufacturing process of the target manufacturing process using the same optimization method as the tolerance range of each process factor applied to the target manufacturing process. That is, the tolerance range optimization operation based on the above-described backward approach may be performed at a level of a plurality of process factors applied to the manufacturing process or at a level of a plurality of manufacturing processes for manufacturing the finished product.

### 3. Method of predicting quality of product

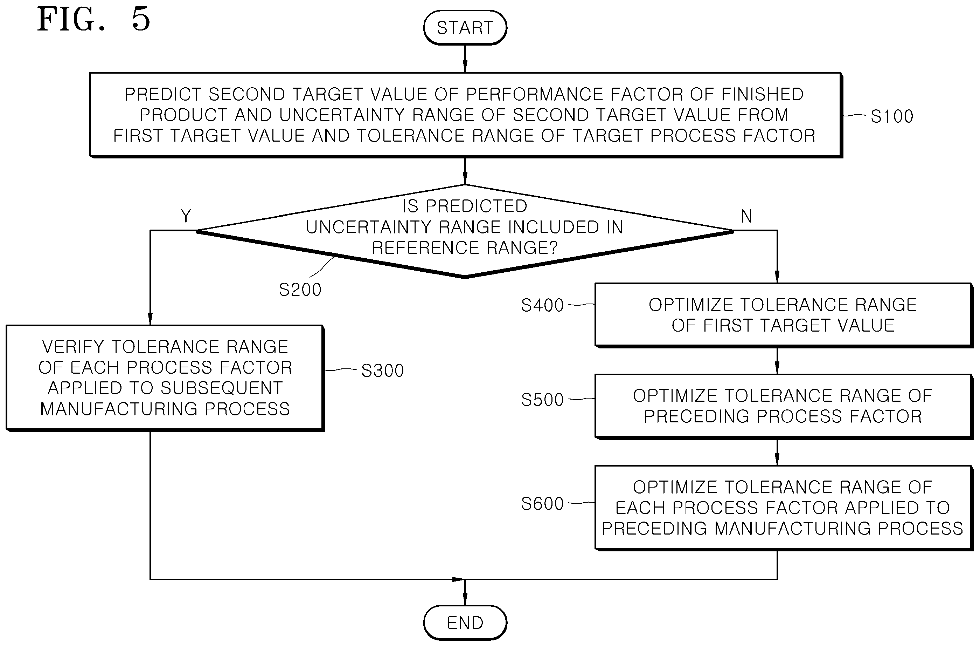

FIG. 5 is a flowchart illustrating a method of predicting quality of a product according to some embodiments. The method of predicting the quality of the product of the present embodiments will be described with reference to FIG. 5, a detailed description identical to that of the above-described content will be omitted, and the description will focus on the example time-series configuration.

First, a processor 200 may predict a second target value of a performance factor of a finished product and an uncertainty range of the second target value from a first target value of a target process factor applied to a target manufacturing process and a tolerance range of the first target value using a performance prediction model (act S100). The uncertainty range may represent a confidence interval of the second target value of the performance factor of the finished product. Further, the performance prediction model can be configured to be pre-trained based on history (historical) data on the first target value of the target process factor actually applied to the target manufacturing process and the tolerance range of the first target value and actual measurement data on the performance factor of the finished product actually manufactured according to the target manufacturing process, and stored in a memory 100.

Next, the processor 200 may compare the uncertainty range predicted in operation S 100 with a predefined reference range to verify the tolerance range of the first target value (operation S200).

In operation S200, when the predicted uncertainty range is included in the reference range, the processor 200 determines that the tolerance range of the first target value is verified. Thereafter, the processor 200 may verify a tolerance range of each process factor applied to a subsequent manufacturing process of the target manufacturing process (operation S300).

In operation S200, when the predicted uncertainty range is not included in the reference range, the processor 200 determines that the tolerance range of the first target value is not verified and optimizes the tolerance range of the first target value (operation S400).

In operation S400, the processor 200 may input a plurality of first to N^{th} candidate tolerance ranges having a different size for the first target value into the performance prediction model to obtain first to N^{th} uncertainty ranges, respectively, and may compare each of the obtained first to N^{th} uncertainty ranges with the reference range to optimize the tolerance range of the first target value (here, N is a natural number greater than or equal to 2). Specifically, the processor 200 may determine first to K^{th} uncertainty ranges included in the reference range from among the first to N^{th} uncertainty ranges and may determine a candidate tolerance range having a minimum size from among first to K^{th} candidate tolerance ranges respectively corresponding to the first to K^{th} uncertainty ranges as the optimized tolerance range of the first target value (here, K is a natural number less than or equal to N). In some embodiments, the tolerance range of the first target value may be optimized with a constraint that the tolerance range is greater than or equal to the reference size.

When the tolerance range of the first target value of the target process factor is optimized through operation S400, the processor 200 may optimize a tolerance range of a preceding process factor applied to product manufacturing prior to the target process factor using the same optimization method as the tolerance range of the target process factor (operation S500).

Further, when the tolerance range of the preceding process factor is optimized through operation S500, the processor 200 may optimize the tolerance range of each process factor applied to a preceding manufacturing process of the target manufacturing process using the same optimization method as the tolerance range of each process factor applied to the target manufacturing process (operation S600).

In some embodiments, the method of predicting the quality of the product according to the present embodiments may be prepared as a computer program for performing the operations S100 to S600 in combination with hardware, stored in a computer-readable recording medium, and implemented in a general-purpose digital computer that executes the computer program. Examples of the computer-readable recording medium include a read-only memory (ROM), a random-access memory (RAM), a compact disc read-only memory (CD-ROM), a magnetic tape, a floppy disk, an optical data storage device, etc. Further, the computer-readable recording medium may be distributed over network-connected computer systems so that a computer-readable code is stored and executed in a distributive manner.

In this way, according to the technology described herein, based on a predefined performance prediction model, it is possible to rapidly predict, in advance, the quality of a finished product by predicting a target value of a performance factor of the finished product and an uncertainty range of the target value from a target value and a tolerance range of a process factor applied to a manufacturing process.

Further, according to the technology described herein, it is possible to verify, in advance, the compatibility of a tolerance range of a process factor applied to each manufacturing process by verifying a tolerance range upon comparing an uncertainty range of the target value of the performance factor of the finished product predicted based on the performance prediction model with a predefined reference range.

Further, according to the technology described herein, it is possible to increase a manufacturing yield of a finished product, reduce a discard rate, and secure a consistent quality of the finished product by optimizing a tolerance range of an unverified process factor.

The implementation described herein may be conducted, for example, as a method, a process, a device, a software program, a data stream, or a signal. Even when discussed only in the context of a single form of implementation (e.g., discussed only as a method), the implementation of the discussed features may also be conducted in other forms (e.g., as a device or program). The device may be implemented by appropriate hardware, software (e.g., at least one non-transitory computer-readable (storage) medium having instructions stored and/or encoded thereon that, when executed by at least one processor, cause the at least one processor to perform any of the methods described herein), firmware, etc. The method may be implemented in a device such as a processor, which generally refers to a processing device, such as a computer, a microprocessor, an integrated circuit, a programmable logic device, etc. The processor further includes a communication device, such as a computer, a cellular phone, a personal digital assistant (PDA), and other devices that facilitate communication of information between end-users.

According to the technology described herein, based on a predefined performance prediction model, it is possible to rapidly predict, in advance, the quality of a finished product by predicting a target value of a performance factor of the finished product and an uncertainty range of the target value from a target value and a tolerance range of a process factor applied to a manufacturing process.

Further, according to the technology described herein, it is possible to verify, in advance, the compatibility of a tolerance range of a process factor applied to each manufacturing process by verifying a tolerance range upon comparing an uncertainty range of a target value of a performance factor of a finished product predicted based on a performance prediction model with a predefined reference range.

Further, according to the technology described herein, it is possible to increase a manufacturing yield of a finished product, reduce a discard rate, and secure a consistent quality of the finished product by optimizing a tolerance range of an unverified process factor.

However, effects that can be achieved through the technology described herein are not limited to the above-described effects and other effects that are not described may be clearly understood by those skilled in the art from the detailed description.

Although the present disclosure has been described with reference to embodiments and drawings illustrating aspects thereof, the present disclosure is not limited thereto. Various modifications and variations can be made by a person skilled in the art to which the present disclosure belongs within the scope of the present disclosure and the claims and their equivalents, below.

Further Embodiments are set out in the following clauses:
Clause 1. An apparatus for predicting quality of a product, comprising:
   a memory configured to store a performance prediction model configured to predict performance of a finished product manufactured through a plurality of manufacturing processes; and
   a processor configured to execute the performance prediction model to predict a second target value of a performance factor of the finished product and an uncertainty range of the second target value from a first target value of a target process factor to be applied to a target manufacturing process and from a tolerance range of the first target value and to compare the predicted uncertainty range with a predefined reference range to verify the tolerance range of the first target value.
Clause 2. The apparatus of clause 1, wherein the uncertainty range represents a confidence interval of the second target value of the performance factor of the finished product.
Clause 3. The apparatus of clause 1 or clause 2, wherein the performance prediction model is configured to be pre-trained based on historical data on a first target value of a target process factor actually applied to the target manufacturing process and a tolerance range of the first target value of the target process factor actually applied and measurement data on a performance factor of a finished product actually manufactured according to the target manufacturing process, and wherein the performance prediction model is stored in the memory.
Clause 4. The apparatus of any preceding clause, wherein the processor is configured to determine that the tolerance range of the first target value is verified when the predicted uncertainty range is included in the predefined reference range.
Clause 5. The apparatus of clause 4, wherein after verification of a respective tolerance range of each process factor to be applied to the target manufacturing process is completed, the processor is configured to verify a tolerance range of each process factor to be applied to subsequent manufacturing processes of the target manufacturing process.
Clause 6. The apparatus of any preceding clause, wherein the processor is configured to determine that the tolerance range of the first target value is not verified when the predicted uncertainty range is not included in the predefined reference range and is configured to optimize the tolerance range of the first target value.
Clause 7. The apparatus of clause 6, wherein the processor is configured to input a plurality of first to N^{th} candidate tolerance ranges having a different size for the first target value into the performance prediction model to obtain first to N^{th} uncertainty ranges, respectively, and is configured to compare each of the obtained first to N^{th} uncertainty ranges with the predefined reference range to optimize the tolerance range of the first target value, and
   wherein N is a natural number greater than or equal to 2.
Clause 8. The apparatus of clause 7, wherein the processor is configured to determine first to K^{th} uncertainty ranges included in the predefined reference range from among the first to N^{th} uncertainty ranges and is configured to determine a candidate tolerance range having a minimum size from among first to K^{th} candidate tolerance ranges respectively corresponding to the first to K^{th} uncertainty ranges as an optimized tolerance range of the first target value, and
   wherein K is a natural number less than or equal to N.
Clause 9. The apparatus of clause 8, wherein after the optimization of the tolerance range of the first target value of the target process factor is completed, the processor is configured to optimize a tolerance range of a preceding process factor to be applied to product manufacturing prior to the target process factor using a same optimization method as the tolerance range of the target process factor.
Clause 10. The apparatus of clause 9, wherein after the optimization of the tolerance range of each process factor applied to the target manufacturing process is completed, the processor is configured to optimize a tolerance range of each process factor to be applied to a preceding manufacturing process of the target manufacturing process using the same optimization method as the tolerance range of each process factor applied to the target manufacturing process.
Clause 11. A method of predicting quality of a product, the method comprising:
   predicting, by a processor, a second target value of a performance factor of a finished product and an uncertainty range of the second target value from a first target value of a target process factor to be applied to a target manufacturing process and a tolerance range of the first target value using a performance model; and
   verifying, by the processor, the tolerance range of the first target value by comparing the predicted uncertainty range with a predefined reference range.
Clause 12. The method of clause 11, wherein in the verifying of the tolerance range of the first target value, the processor determines that the tolerance range of the first target value is not verified when the predicted uncertainty range is not included in the predefined reference range, and
   the method further includes after the verifying of the tolerance range of the first target value, optimizing, by the processor, the tolerance range of the first target value.
Clause 13. The method of clause 12, wherein in the optimizing of the tolerance range of the first target value, the processor inputs a plurality of first to N^{th} candidate tolerance ranges having a different size for the first target value into the performance prediction model to obtain first to N^{th} uncertainty ranges, respectively, and compares each of the obtained first to N^{th} uncertainty ranges with the predefined reference range to optimize the tolerance range of the first target value, and
   wherein N is a natural number greater than or equal to 2,
   wherein in the optimizing of the tolerance range of the first target value, the processor determines first to K^{th} uncertainty ranges included in the predefined reference range from among the first to N^{th} uncertainty ranges and determines a candidate tolerance range having a minimum size from among first to K^{th} candidate tolerance ranges respectively corresponding to the first to K^{th} uncertainty ranges as an optimized tolerance range of the first target value, and
   wherein K is a natural number less than or equal to N.
Clause 14. The method of clause 13, further comprising, after the optimizing of the tolerance range of the first target value, optimizing, by the processor, a tolerance range of a preceding process factor to be applied to product manufacturing prior to the target process factor using a same optimization method as the tolerance range of the target process factor,
   wherein the method further comprises, after the optimizing of the tolerance range of the preceding process factor, optimizing, by the processor, the tolerance range of each process factor to be applied to a preceding manufacturing process of the target manufacturing process using the same optimization method as the tolerance range of each process factor applied to the target manufacturing process.
Clause 15. A non-transitory computer-readable medium having instructions stored thereon that, when executed by a processor, cause the processor to execute operations by performing a method comprising:
   predicting a second target value of a performance factor of a finished product and an uncertainty range of the second target value from a first target value of a target process factor to be applied to a target manufacturing process and a tolerance range of the first target value using a performance prediction model; and
   verifying the tolerance range of the first target value by comparing the predicted uncertainty range with a predefined reference range.

## Claims

1. An apparatus for predicting quality of a product, comprising:
a processor configured to execute a performance prediction model, the performance prediction model configured to predict performance of a finished product manufactured through a plurality of manufacturing processes,
wherein the processor is configured to execute the performance prediction model to predict a second target value of a performance factor of the finished product and an uncertainty range of the second target value from a first target value of a target process factor to be applied to a target manufacturing process and from a tolerance range of the first target value, and to compare the predicted uncertainty range with a predefined reference range to verify the tolerance range of the first target value.

2. The apparatus of claim 1, wherein the uncertainty range represents a confidence interval of the second target value of the performance factor of the finished product.

3. The apparatus of claim 1 or claim 2, wherein the performance prediction model is configured to be pre-trained based on historical data on a first target value of a target process factor actually applied to the target manufacturing process and a tolerance range of the first target value of the target process factor actually applied and measurement data on a performance factor of a finished product actually manufactured according to the target manufacturing process, and wherein the performance prediction model is stored in the memory.

4. The apparatus of any preceding claim, wherein the processor is configured to determine that the tolerance range of the first target value is verified when the predicted uncertainty range is included in the predefined reference range.

5. The apparatus of claim 4, wherein after verification of a respective tolerance range of each process factor to be applied to the target manufacturing process is completed, the processor is configured to verify a tolerance range of each process factor to be applied to subsequent manufacturing processes of the target manufacturing process.

6. The apparatus of any preceding claim, wherein the processor is configured to determine that the tolerance range of the first target value is not verified when the predicted uncertainty range is not included in the predefined reference range, and is configured to optimize the tolerance range of the first target value.

7. The apparatus of claim 6, wherein the processor is configured to input a plurality of first to N^{th} candidate tolerance ranges, each candidate tolerance range having a different size for the first target value into the performance prediction model to obtain first to N^{th} uncertainty ranges, respectively, and is configured to compare each of the obtained first to N^{th} uncertainty ranges with the predefined reference range to optimize the tolerance range of the first target value, and
wherein N is a natural number greater than or equal to 2.

8. The apparatus of claim 7, wherein the processor is configured to determine first to K^{th} uncertainty ranges included in the predefined reference range from among the first to N^{th} uncertainty ranges and is configured to determine a candidate tolerance range having a minimum size from among first to K^{th} candidate tolerance ranges respectively corresponding to the first to K^{th} uncertainty ranges as an optimized tolerance range of the first target value, and
wherein K is a natural number less than or equal to N.

9. The apparatus of claim 8, wherein after the optimization of the tolerance range of the first target value of the target process factor is completed, the processor is configured to optimize a tolerance range of a preceding process factor to be applied to product manufacturing prior to the target process factor using a same optimization method as the tolerance range of the target process factor.

10. The apparatus of claim 9, wherein after the optimization of the tolerance range of each process factor applied to the target manufacturing process is completed, the processor is configured to optimize a tolerance range of each process factor to be applied to a preceding manufacturing process of the target manufacturing process using the same optimization method as the tolerance range of each process factor applied to the target manufacturing process.

11. A method of predicting quality of a product, the method comprising:
predicting, by a processor, a second target value of a performance factor of a finished product and an uncertainty range of the second target value from a first target value of a target process factor to be applied to a target manufacturing process and a tolerance range of the first target value using a performance prediction model; and
verifying, by the processor, the tolerance range of the first target value by comparing the predicted uncertainty range with a predefined reference range.

12. The method of claim 11, wherein in the verifying of the tolerance range of the first target value, the processor determines that the tolerance range of the first target value is not verified when the predicted uncertainty range is not included in the predefined reference range, and
the method further includes after the verifying of the tolerance range of the first target value, optimizing, by the processor, the tolerance range of the first target value.

13. The method of claim 12, wherein in the optimizing of the tolerance range of the first target value, the processor inputs a plurality of first to N^{th} candidate tolerance ranges, each candidate tolerance range having a different size for the first target value into the performance prediction model to obtain first to N^{th} uncertainty ranges, respectively, and compares each of the obtained first to N^{th} uncertainty ranges with the predefined reference range to optimize the tolerance range of the first target value, and
wherein N is a natural number greater than or equal to 2,
wherein in the optimizing of the tolerance range of the first target value, the processor determines first to K^{th} uncertainty ranges included in the predefined reference range from among the first to N^{th} uncertainty ranges and determines a candidate tolerance range having a minimum size from among first to K^{th} candidate tolerance ranges respectively corresponding to the first to K^{th} uncertainty ranges as an optimized tolerance range of the first target value, and
wherein K is a natural number less than or equal to N.

14. The method of claim 13, further comprising, after the optimizing of the tolerance range of the first target value, optimizing, by the processor, a tolerance range of a preceding process factor to be applied to product manufacturing prior to the target process factor using a same optimization method as the tolerance range of the target process factor,
wherein the method further comprises, after the optimizing of the tolerance range of the preceding process factor, optimizing, by the processor, the tolerance range of each process factor to be applied to a preceding manufacturing process of the target manufacturing process using the same optimization method as the tolerance range of each process factor applied to the target manufacturing process.

15. A computer program comprising instructions which, when executed by a processor, cause the processor to execute operations by performing a method comprising:
predicting a second target value of a performance factor of a finished product and an uncertainty range of the second target value from a first target value of a target process factor to be applied to a target manufacturing process and a tolerance range of the first target value using a performance prediction model; and
verifying the tolerance range of the first target value by comparing the predicted uncertainty range with a predefined reference range.
